Europäisches Patentamt

European Patent Office

Office européen des brevets

(11) Veröffentlichungsnummer: **0 345 632**

**A1**

(12) **EUROPÄISCHE PATENTANMELDUNG**

(21) Anmeldenummer: 89109905.3

(22) Anmeldetag: 01.06.89

(51) Int. Cl.⁴: **B01D 53/36 , C01B 17/775**

(30) Priorität: 07.06.88 DE 3819417

(43) Veröffentlichungstag der Anmeldung:
13.12.89 Patentblatt 89/50

(84) Benannte Vertragsstaaten:
AT BE CH DE ES FR GB GR IT LI LU NL SE

(71) Anmelder: UTAB GESELLSCHAFT FÜR
UMWELTTECHNISCHEN ANLAGENBAU MBH
Am Grillopark 8
D-4100 Duisburg(DE)

(72) Erfinder: Der Erfinder hat auf seine Nennung
verzichtet

(74) Vertreter: von Rohr, Hans Wilhelm, Dipl.-Phys.
Patentanwälte Gesthuysen & von Rohr
Huyssenallee 15 Postfach 10 13 33
D-4300 Essen 1(DE)

(54) Verfahren und Vorrichtung zur Reinigung von schwefeldioxidhaltigen Rauchgasen.

(57) Bei einem Verfahren zur Reinigung von schwefeldioxidhaltigen Rauchgasen durch katalytische Oxidation an feuchter Aktivkohle (13), wobei das zu
reinigende Rauchgas vor der katalytischen Oxidation
durch Besprühung mit vorzugsweise heißer Schwefelsäure gewaschen wird, wobei durch die katalytische Oxidation Schwefeldioxid mit Sauerstoff und
Wasser zu verdünnter Schwefelsäure umgesetzt
wird und wobei aus dem Oxidationsprozeß hervorgehendes wasserdampfgesättigtes Reingas nach indirekter Erwärmung in einem Wärmetauscher (8) vorzugsweise über einen Kamin (19) in die Atmosphäre
geleitet wird, ist ein hinreichender Auftrieb des Reingases ohne zusätzliche Energiezufuhr und bei geringem apparativem Aufwand dadurch gewährleistet,
daß das mit Schwefelsäure gewaschene Rauchgas
vor der katalytischen Oxidation in den Wärmetauscher (8) geleitet und dort durch das Reingas indirekt auf die Prozeßtemperatur der katalytischen Oxidation abgekühlt und dabei das Reingas durch das
gewaschene Rauchgas indirekt auf eine Temperatur
vorzugsweise oberhalb seines Taupunktes erwärmt
wird.

## Verfahren und Vorrichtung zur Reinigung von schwefeldioxidhaltigen Rauchgasen

Die Erfindung betrifft ein Verfahren zur Reinigung von schwefeldioxidhaltigen Rauchgasen nach dem Oberbegriff des Anspruchs 1 sowie eine Vorrichtung zur Durchführung eines solchen Verfahrens.

Zur Reduzierung des Schwefeldioxids in Abgasen bzw. Rauchgasen sind zahlreiche Verfahren bekannt. Das wohl bedeutendste Verfahren zur Reinigung von schwefeldioxidhaltigen Rauchgasen ist die katalytische Oxidation an feuchter Aktivkohle. Von einem solchen Verfahren geht die Erfindung aus (DE-OS 34 35 931). Es handelt sich dabei um ein mehrstufiges Verfahren. Zunächst wird das mit Schwefeldioxid beladene Rauchgas in zwei Stufen mit Schwefelsäure gewaschen und dabei einerseits wasserdampfgesättigt, andererseits auf die Prozeßtemperatur der katalytischen Oxidation abgekühlt. Das Rauchgas wird dann über einen Aktivkohlefilter geleitet, der kontinuierlich oder diskontinuierlich mit soviel Wasser besprüht wird, daß eine 3 bis 20 %ige Schwefelsäure abfließt. Beim Durchströmen des Aktivkohlefilters wird das Rauchgas wiederum mit Wasserdampf gesättigt. Aus dem Aktivkohlefilter austretendes Reingas wird entweder direkt oder nach Aufheizen in die Atmosphäre geleitet. Da das Reingas nach Verlassen des Aktivkohlefilters wasserdampfgesättigt ist, ist ein ausreichender Auftrieb des Reingases, beispielsweise in einem Kamin, nicht gewährleistet. Zur Verbesserung des Auftriebs wird bei dem bekannten Verfahren das Reingas entweder in einer weiteren Vorrichtung mittels heißer Rauchgase aufgeheizt (siehe z. B. die Zeitschrift "STAUB", Band 47 (1987), Seite IV, Bild ST 3769) oder in mit Fremdenergie versorgten Wärmetauschern indirekt erwärmt. Anschließend gelangt das aufgeheizte bzw. erwärmte Reingas beispielsweise über einen Kamin in die Atmosphäre. Die Verwendung eines mit Fremdenergie arbeitenden Wärmetauschers bringt jedoch erhebliche Energiekosten mit sich.

Der Erfindung liegt die Aufgabe zugrunde, ein Verfahren zur Reinigung von schwefeldioxidhaltigen Rauchgasen durch katalytische Oxidation an feuchter Aktivkohle anzugeben, bei dem ein hinreichender Auftrieb des Reingases ohne zusätzliche Energiezufuhr und bei geringem apparativem Aufbau gewährleistet ist.

Das erfindungsgemäße Verfahren, bei dem die zuvor aufgezeigte Aufgabe gelöst ist, ist durch die Merkmale des kennzeichnenden Teils des Anspruchs 1 beschrieben. Dabei ist wesentlich, daß ein Wärmetauscher einerseits von dem gewaschenen Rauchgas, andererseits von dem entschwefelten Rauchgas - in voneinander getrennten und in wärmetauschender Beziehung zueinander stehenden Strömungspfaden - durchströmt wird. Der Wärmetauscher erfüllt folglich zwei Funktionen, nämlich zum einen das Abkühlen des Rauchgases ungefähr auf die Prozeßtemperatur der katalytischen Oxidation, nachdem das Rauchgas zuvor aber in vorteilhafter Weise noch bei hoher Temperatur gewaschen worden ist, zum anderen das Erwärmen des entschwefelten Rauchgases, und zwar vorzugsweise auf eine Temperatur oberhalb des Taupunktes des Reingases. Die vom Rauchgas vor dem katalytischen Oxidationsprozeß notwendigerweise abzugebende Energie wird also insgesamt auf das in die Atmosphäre abzuführende Reingas übertragen. Durch diese Maßnahme ist weder zum Abkühlen des Rauchgases vor dem Oxidationsprozeß noch zum Erwärmen des in die Atmosphäre abzuführenden Reingases Fremdenergie erforderlich. Das erfindungsgemäße Verfahren nützt die verfahrensimmanente Energie optimal aus und senkt dabei die Betriebskosten einer dieses Verfahrens anwendenden Anlage. Da neben dem Wärmetauscher keine zusätzlichen Aggregate erforderlich sind, ist der apparative Aufwand gering, das Verfahren also insbesondere für Kleinfeuerungsanlagen geeignet. Entsprechendes gilt für eine erfindungsgemäße Vorrichtung.

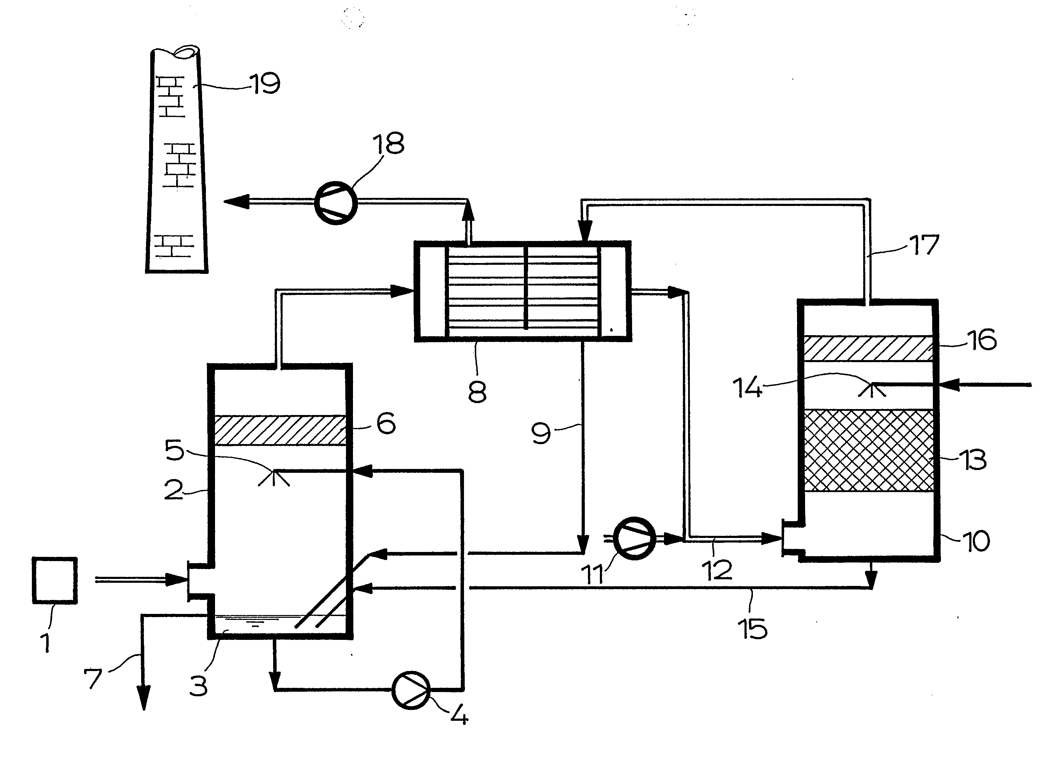

Es gibt nun verschiedene Möglichkeiten, die Lehre der vorliegenden Erfindung in vorteilhafter Weise auszugestalten und weiterzubilden. Dazu ist einerseits auf die nachgeordneten Ansprüche, andererseits auf die nachfolgende Erläuterung lediglich eines Ausführungsbeispiels der Erfindung anhand der Zeichnung zu verweisen. In Verbindung mit der Erläuterung des bevorzugten Ausführungsbeispiels der Erfindung anhand der Zeich nung werden auch im allgemeinen bevorzugte Ausgestaltungen der Lehre erläutert.

Die einzige Figur zeigt in Form eines Diagramms schematisch Aufbau und Ablauf eines Ausführungsbeispiels am Beispiel der Reinigung von schwefeldioxidhaltigen Rauchgasen aus einer kleinen Dampferzeugungsanlage bis ca. 5 MW, die mit schwerem Heizöl betrieben wird. Das erfindungsgemäße Verfahren bzw. die erfindungsgemäße Vorrichtung lassen sich selbstverständlich nicht nur zur Entschwefelung von Rauchgasen aus der Schwerölfeuerung, sondern generell zur Entschwefelung jeglicher Rauchgase anwenden.

In dem in der einzigen Figur dargestellten Diagramm entsteht in einer als kleine Dampferzeugungsanlage ausgeführten Verbrennungsanlage 1 beim Verbrennen von schwerem Heizöl feuchtes, schwefeldioxidhaltiges Rauchgas. Die Verbrennungsanlage 1 liefert pro Stunde etwa 1.000 Nm$^3$ feuchtes Rauchgas. Das zu reinigende Rauchgas enthält pro Nm³ 1.600 mg $SO_2$, 2 bis 3 Vol% $O_2$ und 13 Vol% $H_2O$. Das Rauchgas strömt aus der Verbrennungsanlage 1 mit einer Temperatur von ca. 210 °C in einen Wäscher 2.

Im Wäscher 2 wird das Rauchgas mit Schwefelsäure gewaschen. Dies geschieht hier durch Bedüsen im Gegenstrom, d. h. die Schwefelsäure wird entgegen der Strömungsrichtung des Rauchgases verdüst. An sich könnte der Wäscher auch im Gleichstrom arbeiten. Es könnte auch eine andere Art von Wäscher, z. B. ein Sprudelbecken, eingesetzt werden. Die Konzentration und die Temperatur der Schwefelsäure richten sich einerseits nach dem Wassergehalt des Rauchgases, andererseits nach der Menge der im katalytischen Oxidationsprozeß entstehenden verdünnten Schwefelsäure, worauf später noch näher eingegangen wird. Für den gesamten Reinigungsprozeß ist es besonders vorteilhaft, wenn das Rauchgas mit einer 60 bis 80 %igen Schwefelsäure gewaschen wird. Im hier bevorzugten Ausführungsbeispiel stellt sich eine etwa 73 %ige Schwefelsäure mit einer Temperatur von etwa 130 °C ein. Die zur Wäsche des Rauchgases notwendige Schwefelsäure wird aus einem im Bodenbereich des Wäschers 2 ausgebildeten Sammelbecken 3 mittels einer Pumpe 4 zu einer etwa mittig im Wäscher 2 vorgesehenen Düse 5 gefördert. Durch Bedüsen des im Wäscher 2 aufsteigenden Rauchgases werden einerseits Feinstaubpartikel aus dem Rauchgas entfernt, andererseits wird das Rauchgas wasserdampfteilgesättigt.

Vor Verlassen des Wäschers 2 durchströmt das gewaschene Rauchgas einen als Sprühabscheider ausgebildeten Abscheider 6. Der Abscheider 6 verhindert, daß Schwefelsäure mit dem Rauchgas mitgerissen wird und dabei den Wäscher 2 verläßt. Die im Abscheider 6 abgefangene Schwefelsäure gelangt ebenfalls in das Sammelbecken 3. Bei der Wäsche des Rauchgases fallen in Verbindung mit dem später erläuterten Oxidationsprozeß pro Stunde ca. 3 kg 73 %ige Schwefelsäure an. Die zur Wäsche nicht mehr benötigte Schwefelsäure wird dann über Leitung 7 abgeführt und kann beispielsweise in einem getrennten Prozeß weiter aufkonzentriert werden.

Nach der Wäsche strömt das wasserdampfteilgesättigte Rauchgas in einen Wärmetauscher 8. Es weist beim Eintritt in den Wärmetauscher 8 eine Temperatur von etwa 130 °C auf. Dort wird das Rauchgas indirekt auf ca. 90 °C abgekühlt. Im Wärmetauscher 8 ggf. anfallendes Kondensat wird über Leitung 9 dem Sammelbecken 3 des Wäschers 2 zugeführt.

Vom Wärmetauscher 8 aus gelangt das Rauchgas in einen Aktivkohlereaktor 10. Zur Förderung des katalytischen Oxidationsprozesses ist es besonders vorteilhaft, wenn dem Rauchgas vor Eintritt in den Aktivkohlereaktor 10 Luft zugeführt wird, die das Rauchgas einerseits kühlt, andererseits mit Sauerstoff anreichert. Im hier bevorzugten Ausführungsbeispiel werden dem Rauchgas über ein Gebläse 11 pro Stunde ca. 200 Nm³ Luft mit einer Temperatur von etwa 20 °C zugeführt. Über Leitung 12 gelangen dann pro Stunde ca. 1.200 Nm³ Rauchgas und Luft mit einer Temperatur von ca. 79 °C - Prozeßtemperatur des Aktivkohlereaktors 10 - in den Aktivkohlereaktor 10. Das in den Aktivkohlereaktor 10 strömende Gas - Mischung aus Rauchgas und Luft - weist einen Schwefeldioxidanteil von etwa 1.300 mg/Nm³ auf. Desweiteren sind in dem Gas 5 bis 6 Vol% Sauerstoff und ca. 14,7 Vol% Wasser enthalten.

Zur katalytischen Oxidation sind im Aktivkohlereaktor 10 mehrere Schichten Aktivkohle 13 mit unterschiedlichen Körnungen vorgesehen. Das Gas durchströmt den Aktivkohlereaktor 10 und dabei auch die Aktivkohle 13 von unten nach oben. Dabei wird das Schwefeldioxid des Rauchgases an der Aktivkohle 13 abgeschieden. und diskontinuierlich mit Wasser von der Aktivkohle 13 abgewaschen bzw. ausgetrieben. Über eine oberhalb der Aktivkohle 13 angeordnete Düse 14 werden pro Stunde ca. 60 kg Wasser auf die Aktivkohle 13 versprüht. Dabei fällt eine etwa 5 %ige Schwefelsäure an, die sich im Bodenbereich des Aktivkohlereaktors 10 sammelt und von dort über eine Leitung 15 dem Sammelbecken 3 des Wäschers 2 zugeführt wird. Bevor das vom Schwefeldioxid weitgehend befreite Rauchgas den Aktivkohlereaktor 10 als Reingas verläßt, durchströmt es einen Sprühabscheider 16 zum Abfangen mitgerissener Schwefelsäure. Die durch den Sprühabscheider 16 abgefangene Schwefelsäure gelangt ebenfalls in den Bodenbereich des Aktivkohlereaktors 10 und von dort aus in das Sammelbecken 3 des Wäschers 2.

Eingangs ist bereits erläutert worden, daß sich die Konzentration und die Temperatur im Wäscher 2 u. a. nach der Menge der aus dem Aktivkohlereaktor 10 ablaufenden Schwefelsäure richtet. Bei der zuvor genannten Gaszusammensetzung werden über Leitung 15 pro Stunde ca. 44 kg 5 %ige Schwefelsäure bei ca. 50 °C dem Wäscher 2 zugeführt. Durch Wasserverdampfung wird diese Säure im Sammelbecken 3 auf ca. 73 % konzentriert.

Das Reingas verläßt den Aktivkohlereaktor 10 wasserdampfgesättigt und weist eine Temperatur von etwa 56 °C auf. Erfindungswesentlich ist nun, daß das wasserdampfgesättigte Reingas über Leitung 17 in den Wärmetauscher 8 gelangt und dort mit dem vom Wäscher 2 aus in den Wärmetauscher 8 geleiteten Rauchgas in wärmetauschende Beziehung tritt. Dabei strömen Rauchgas und Reingas auf voneinander getrennten Strömungspfaden. Erfindungsgemäß weist der Wärme tauscher 8 zwei unterschiedliche Funktionen auf. Einerseits kühlt er das aus dem Wäscher 2 strömende Rauchgas durch das Reingas auf ca. 90 °C ab, andererseits erwärmt er das aus dem Aktivkohlereaktor 10 strömende Reingas durch das Rauchgas auf eine Temperatur oberhalb des Taupunktes des Reingases, hier also auf eine Temperatur von etwa 85 °C. Die bei der notwendigen Abkühlung des Rauchgases abzuführende Energie wird also zur Erwärmung des Reingases genutzt. Weder für das Abkühlen des Rauchgases noch für das Erwärmen des Reingases ist externe Energie erforderlich. Hinzu kommt der Vorteil, daß die Abkühlung des Rauchgases und die Erwärmung des Reingases in ein und derselben Vorrichtung - im Wärmetauscher 8 - erfolgen kann.

Das Reingas wird nach Durchströmen des Wärmetauschers 8, ggf. über ein Gebläse 18, einem Kamin 19 zugeführt. Von dort aus gelangt das Reingas - weitgehend von Schwefeldioxid befreit - in die Atmosphäre.

Bei dem hier dargestellten Beispiel des erfindungsgemäßen Verfahrens werden pro Stunde ca. 1.270 Nm³ wasserdampfgesättigtes Reingas in die Atmosphäre geleitet. Dabei enthält das Reingas ca. 130 mg/Nm³ Schwefeldioxid, 5 bis 6 Vol% Sauerstoff und etwa 16 Vol% Wasser. Der Schwefeldioxid-Abscheidegrad dieses Verfahrens liegt bei über 90 %.

**Ansprüche**

1. Verfahren zur Reinigung von schwefeldioxidhaltigen Rauchgasen durch katalytische Oxidation an feuchter Aktivkohle, wobei das zu reinigende Rauchgas vor der katalytischen Oxidation mit Schwefelsäure gewaschen wird, wobei durch die katalytische Oxidation mit Schwefeldioxid mit Sauerstoff und Wasser zu verdünnter Schwefelsäure umgesetzt wird und wobei aus dem Oxidationsprozeß hervorgehendes wasserdampfgesättigtes Reingas nach indirekter Erwärmung in einem Wärmetauscher in die Atmosphäre geleitet wird, **dadurch gekennzeichnet,** daß das Rauchgas nach der Wäsche mit Schwefelsäure und vor der katalytischen Oxidation in den Wärmetauscher geleitet und dort durch Wärmeaustausch mit dem Reingas indirekt bis nahe an die oder bis auf die Prozeßtemperatur der katalytischen Oxidation abgekühlt wird.

2. Verfahren nach Anspruch 1, dadurch gekennzeichnet, daß das Reingas im Wärmetauscher durch das gewaschene Rauchgas auf eine Temperatur oberhalb seines Taupunktes erwärmt wird.

3. Verfahren nach Anspruch 1, dadurch gekennzeichnet, daß das mit Schwefelsäure gewaschene Rauchgas zum Abfangen mitgerissener Schwefelsäure einen Abscheider durchströmt.

4. Verfahren nach Anspruch 1, dadurch gekennzeichnet, daß das mit Schwefelsäure gewaschene Rauchgas vor Eintritt in den Wärmetauscher eine Temperatur zwischen 100 °C und 150 °C, vorzugsweise zwischen 110 °C und 130 °C, aufweist.

5. Verfahren nach Anspruch 1, dadurch gekennzeichnet, daß dem aus dem Wärmetauscher strömenden Rauchgas vor der katalytischen Oxidation Luft zugeführt und das Rauchgas durch die zugeführte Luft einerseits bis auf die Prozeßtemperatur der katalytischen Oxidation gekühlt, andererseits mit Sauerstoff angereichert wird.

6. Verfahren nach Anspruch 1, dadurch gekennzeichnet, daß das aus der katalytischen Oxidation hervorgehende Reingas zum Abfangen mitgerissener Schwefelsäure einen Abscheider durchströmt.

7. Vorrichtung zur Reinigung von schwefeldioxidhaltigen Rauchgasen durch katalytische Oxidation an feuchter Aktivkohle, wobei das zu reinigende Rauchgas vor der katalytischen Oxidation mit Schwefelsäure gewaschen wird, wobei durch die katalytische Oxidation Schwefeldioxid mit Sauerstoff und Wasser zu verdünnter Schwefelsäure umgesetzt wird und wobei aus dem Oxidationsprozeß hervorgehendes wasserdampfgesättigtes Reingas nach indirekter Erwärmung in einem Wärmetauscher in die Atmosphäre geleitet wird, mit mindestens einem Wäscher (2) zum Waschen des Rauchgases mit Schwefelsäure, einem Aktivkohlereaktor (10) zur katalytischen Oxidation des Rauchgases an feuchter Aktivkohle (13) und einem Wärmetauscher (8), wobei das aus dem Aktivkohlereaktor (10) strömende gereinigte Rauchgas - Reingas -auf einem ersten Strömungspfad des Wärmetauschers (8) durch den Wärmetauscher (8) hindurchströmt und dabei in wärmetauschender Beziehung mit einem zweiten Strömungspfad des Wärmetauschers (8) steht, **dadurch gekennzeichnet,** daß der Wärmetauscher (8) zur Erwärmung des Reingases mit seinem zweiten Strömungspfad zwischen der Abströmseite des Wäschers (2) und der Einströmseite des Aktivkohlereaktors (10) eingesetzt ist.

8. Vorrichtung nach Anspruch 7, dadurch gekennzeichnet, daß zwischen dem Wärmetauscher (8) und der Einströmseite des Aktivkohlereaktors (10) ein Beilufteintritt angeordnet ist, so daß dem aus dem Wärmetauscher (8) strömenden Rauchgas vor der katalytischen Oxidation Luft zugeführt und das Rauchgas durch die zugeführte Luft einerseits bis auf die Prozeßtemperatur der katalytischen Oxidation gekühlt, andererseits mit Sauerstoff angereichert werden kann.

9. Vorrichtung nach Anspruch 8, dadurch gekennzeichnet, daß der Beilufteintritt mit einem Gebläse (11) versehen ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | GB-A-2 138 555 (DAVY McKEE)<br>* Figuren 2-4 *<br>--- | 1-9 | B 01 D 53/36<br>C 01 B 17/775 |
| A | EP-A-0 183 891 (SIMMERING-GRAZ PAUKER)<br>* Figuren 1-6 *<br>--- | 1-9 | |
| A | FR-A-2 310 312 (METALLGESELLSCHAFT)<br>* Figur 1 *<br>--- | 1-9 | |
| A | DE-A-1 567 451 (DUISBURGER KUPFERHÜTTE)<br>* Figur *<br>--- | 1-9 | |
| A | WO-A-8 103 654 (BOLIDEN AB)<br>* Figur *<br>--- | | |
| A | US-A-3 519 388 (J. RINCKHOFF)<br>* Figur *<br>----- | | |

| | |
|---|---|
| | **RECHERCHIERTE SACHGEBIETE (Int. Cl.4)**<br><br>B 01 D<br>C 01 B |

Der vorliegende Recherchenbericht wurde für alle Patentansprüche erstellt

| Recherchenort | Abschlußdatum der Recherche | Prüfer |
|---|---|---|
| DEN HAAG | 06-09-1989 | KANOLDT W.W. |